# EUROPEAN PATENT APPLICATION

(11) **EP 4 767 813 A1**
(43) Date of publication of application: **01.07.2026**
(21) Application number: 24856143.3
(22) Date of filing: 02.07.2024
(51) Int. Cl.: A01G 3/02, B26B 15/00

(54) **ELECTRIC PRUNING SHEARS**

(30) Priority: 22.08.2023 JP 2023134670
(71) Applicant: ARS Corporation, Sakai City, Osaka 599-8267 (JP)
(72) Inventor: NII Hidetatsu, Sakai City Osaka 599-8267 (JP)
(74) Representative: Winter, Brandl - Partnerschaft mbB
(86) International application number: PCT/JP2024/023979
(87) International publication number: WO 2025/041448

(57) **Abstract**

There are provided electric long reach pruning shears that are capable of easily performing angle adjustment of a blade and are improved in workability.

Electric long reach pruning shears 1 for cutting a plant include: a cylindrical handle portion 9 that extends in a predetermined axis line direction; a cutting unit 3 that is attached to a distal end portion of the cylindrical handle portion 9 and has two blades including at least one movable blade 3B; a drive unit 5 for applying a driving force to the movable blade 3B; a housing 2 that is attached to a rear end portion of the cylindrical handle portion 9 and accommodates the drive unit 5; a transmission mechanism 8 for transmitting the driving force to the movable blade 3B, the transmission mechanism 8 being interposed between the drive unit 5 and the cutting unit 3; a holding portion 30 that holds the cylindrical handle portion 9 to be rotatable around an axis line of the cylindrical handle portion with respect to the housing 2; and a rotation restriction portion 34 that restricts, at a predetermined rotation angle, rotation of the cylindrical handle portion 9 around the axis line with respect to the housing 2.

## Description

### Technical Field

The present invention relates to, for example, electric long reach pruning shears used for pruning a branch, a leaf, or the like at a high position on a tree.

### Background Art

In the related art, as long reach pruning shears used for cutting (pruning) a branch, a leaf, or the like (a cutting target object) at a high position on a tree, electric long reach loppers are proposed in which a blade provided at a distal end portion of a handle is operated by power of a power machine provided at a rear end portion of the handle to prune the cutting target object (see Patent Literature 1).

However, in the electric long reach loppers of the related art, an angle of the blade may be adjusted so that the blade reaches a required location while avoiding a branch or a leaf that is not a cutting target or the angle of the blade matches an angle of a branch or a leaf that is the cutting target. In this case, in the electric long reach loppers of the related art, the handle is formed to be strong in order to ensure a function as electric shears, and the entire long reach loppers need to be rotated in order to set the blade provided at the distal end portion at an appropriate angle. Therefore, there is room for improvement in the electric long reach loppers of the related art from the viewpoint of workability.

### Citation List

### Patent Literature

Patent Literature 1: JP 2014-230533 A

### Summary of Invention

### Technical Problem

In view of the above-described problems, an object of the present invention is to provide electric long reach pruning shears that ensure to function as electric shears and are capable of easily performing angle adjustment of a blade and are improved in workability.

### Solution to Problem

According to the present invention, there are provided electric long reach pruning shears for cutting a plant at a high position, including: a cylindrical handle portion that extends in a predetermined axis line direction; a cutting unit that is attached to a distal end portion of the cylindrical handle portion and has two blades including at least one movable blade; a drive unit for applying a driving force to the movable blade; a housing that is attached to a rear end portion of the cylindrical handle portion and accommodates the drive unit; a transmission mechanism for transmitting the driving force to the movable blade, the transmission mechanism being interposed between the drive unit and the cutting unit; a holding portion that holds the cylindrical handle portion to be rotatable around an axis line of the cylindrical handle portion with respect to the housing; and a rotation restriction portion that restricts, at a predetermined rotation angle, rotation of the cylindrical handle portion around the axis line with respect to the housing.

### Advantageous Effects of Invention

According to the present invention, it is possible to provide electric long reach pruning shears that ensure to function as electric shears and are capable of easily performing angle adjustment of a blade and are improved in workability.

### Brief Description of Drawings

FIG. 1 is a front view illustrating a structure of electric long reach pruning shears according to an embodiment of the present invention.
FIG. 2 is a front view illustrating the structure of the electric long reach pruning shears in a partially disassembled state.
FIG. 3 is a schematic view illustrating a structure of a transmission mechanism in a closed blade state.
FIG. 4 is a schematic view illustrating the structure of the transmission mechanism in an open blade state.
FIG. 5 is a cross-sectional view illustrating a structure of a holding portion (a stopper member).
FIG. 6A is a cross-sectional view illustrating a relationship between a cylindrical handle portion and a rotation restriction portion in a first state.
FIG. 6B is a cross-sectional view illustrating a relationship between the cylindrical handle portion and the rotation restriction portion in a second state.
FIG. 6C is a cross-sectional view illustrating a relationship between the cylindrical handle portion and the rotation restriction portion in a third state.
FIG. 7 is a schematic view illustrating a structure of an attachment member in a modification embodiment.
FIG. 8A is an end view illustrating the structure of the attachment member in the modification embodiment.
FIG. 8B is an end view illustrating the structure of the attachment member in the modification embodiment.
FIG. 9 is a schematic view illustrating a structure of a holding portion in a modification embodiment.
FIG. 10 is a cross-sectional view illustrating the structure of the holding portion in the modification embodiment.
FIG. 11A is a cross-sectional view illustrating the structure of the holding portion in the modification embodiment.
FIG. 11B is a cross-sectional view illustrating the structure of the holding portion in the modification embodiment.

### Description of Embodiments

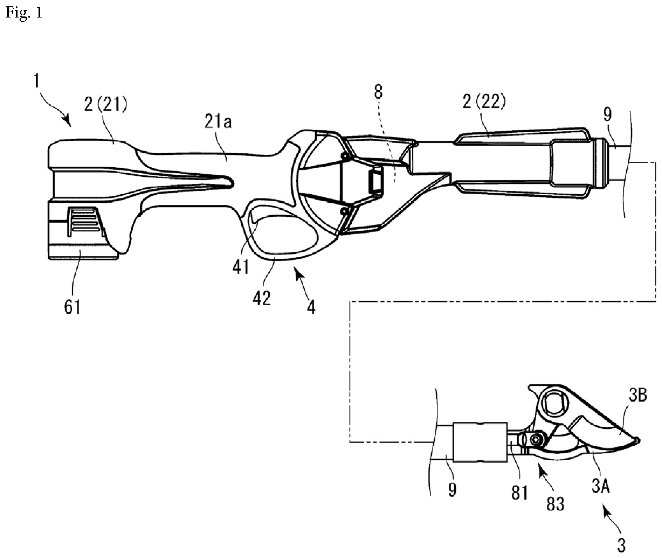

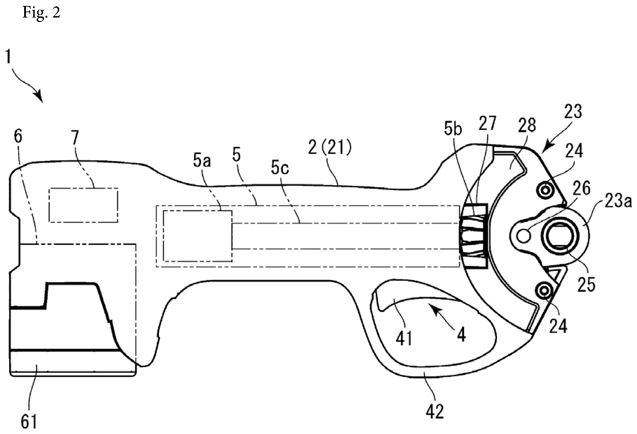

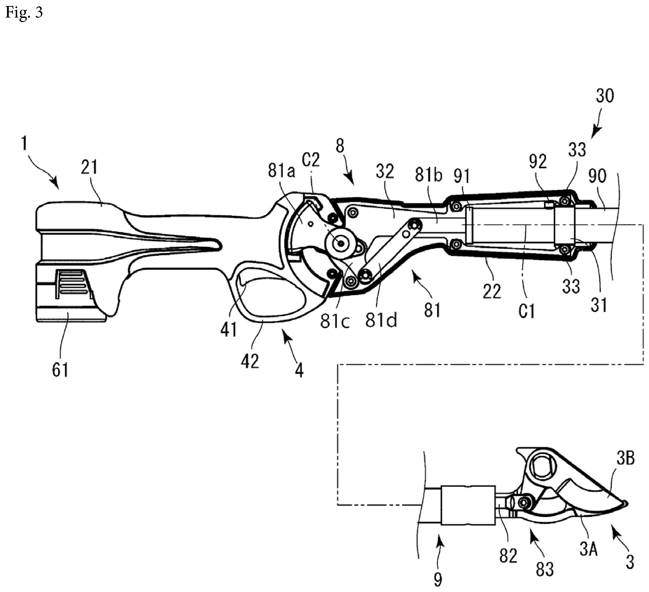

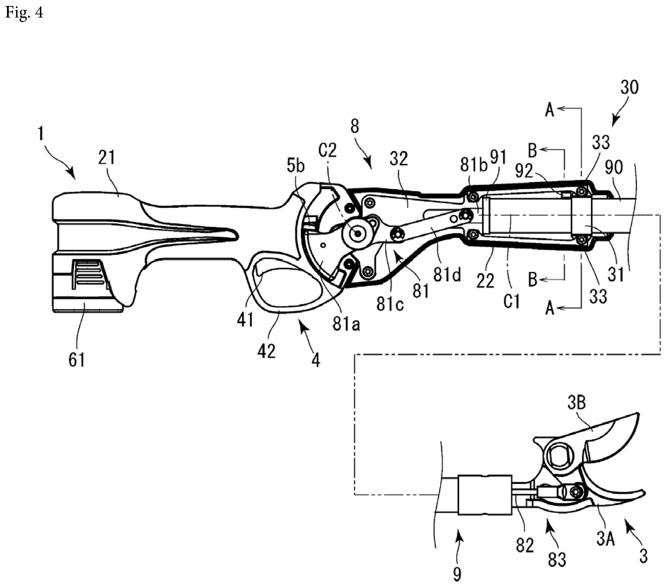

Hereinafter, examples of embodiments of the present invention will be described with reference to the drawings. FIG. 1 is a front view illustrating a structure of electric long reach pruning shears 1 according to an embodiment (a first embodiment) of the present invention. FIG. 2 is a front view illustrating the structure of the electric long reach pruning shears 1 in a partially disassembled state. FIG. 3 is a schematic view illustrating a structure of a transmission mechanism 8 in a closed blade state. FIG. 4 is a schematic view illustrating the structure of the transmission mechanism 8 in an open blade state. Note that, in FIG. 2, illustration of a distal end portion (a second housing 22, a cutting unit 3, and the like) is omitted, and in FIGS. 3 and 4, illustration of a right side surface of the second housing 22 is omitted for convenience of description.

The electric long reach pruning shears 1 of the present invention are shears for cutting a branch, a leaf, or the like (a cutting target object) at a high location on a tree and are a type of electric shears that prune the cutting target object by operating a blade with power of an electric drive source. As illustrated in FIGS. 1 and 2, the electric long reach pruning shears 1 include a drive unit 5 for applying a driving force to the electric long reach pruning shears 1, a power supply unit 6 that supplies electric power to the drive unit 5, a control unit 7 that controls operation of each unit of the electric long reach pruning shears 1, a transmission mechanism 8 for transmitting the driving force of the drive unit 5 to the cutting unit 3, and a cylindrical handle portion 9 that extends in a predetermined axis line (a first axis line C1) direction.

Note that an orientation of each unit of the electric long reach pruning shears 1 changes depending on a posture of the electric long reach pruning shears 1 when the electric long reach pruning shears 1 are gripped by a user; however, for convenience of description, in the present specification, an axis line direction (extension direction) of the cylindrical handle portion 9 is defined as a front-rear direction, a direction that is horizontally orthogonal to the axis line direction of the cylindrical handle portion 9 is defined as a left-right direction, and a direction that is orthogonal to both the front-rear direction and the left-right direction is defined as a vertical direction. Further, a side in the front-back direction on which the cutting unit 3 is provided is defined as a front side, a right-hand side when facing frontward is defined as a right direction, and a left-hand side when facing frontward is defined as a left direction.

As illustrated in FIGS. 1 to 4, the housing 2 includes a first housing 21 positioned on a rear end side of the housing 2 and a second housing 22 detachably provided at a front end portion of the first housing 21.

The first housing 21 includes a grip portion 21a having an outer surface made of a material having a larger frictional force (a friction coefficient) than other portions of the first housing 21. Further, a central portion of the first housing 21 in a longitudinal direction thereof can be gripped and used as a grip portion by a user (an operator). The grip portion 21a is attached to left and right outer surfaces of the central portion of the first housing 21 in the longitudinal direction. The grip portion 21a is made of a material such as rubber or resin.

Each of the first housing 21 and the second housing 22 is made of a hard material such as a metal material or a resin material and is formed in a substantially cylindrical shape that extends in the front-rear direction and has an interior space. As illustrated in FIG. 2, the drive unit 5, the power supply unit 6, and the control unit 7 are accommodated in the interior space of the first housing 21. Further, as illustrated in FIGS. 3 and 4, the transmission mechanism 8 and a part (a rear end portion) of the cylindrical handle portion 9 are accommodated in the interior space of the second housing 22. That is, the housing 2 (the first housing 21 and the second housing 22) can be described to be attached to the rear end portion of the cylindrical handle portion 9.

As illustrated in FIG. 2, an attachment portion 23 for attaching the second housing 22 is provided at the front end portion of the first housing 21. The attachment portion 23 has fixing screw holes 24, a positioning hole 25, a rotation preventing hole 26, an opening portion 27, and a groove portion 28.

The fixing screw holes 24 are screw holes for fixing the second housing 22. The fixing screw holes 24 extend in the left-right direction, are formed to be open rightward, and are provided at two positions with the positioning hole 25 interposed therebetween. Although not illustrated because not included in an essential part of the present invention, the fixing through-hole corresponding to the fixing screw hole 24 is formed in the second housing 22, the fixing through-hole of the second housing 22 and the fixing screw hole 24 are fastened by a predetermined fastening member in the state of being overlapped, and the second housing 22 is attached to the attachment portion 23. The second housing 22 can be detached from the attachment portion 23 by removing the fastening member.

The positioning hole 25 is provided at a central portion of the attachment portion 23 in the vertical direction and at a front end portion of the attachment portion 23 in the front-rear direction. The positioning hole 25 is formed in a metal plate 23a fixed to the first housing 21. The positioning hole 25 is a through-hole extending in the left-right direction. Although not illustrated, a positioning through-hole corresponding to the positioning hole 25 is formed in the second housing 22, and in a state in which the second housing 22 is attached to the attachment portion 23, the positioning through-hole of the second housing 22 and the positioning hole 25 are fastened by a predetermined fastening member in the state of being overlapped, and the second housing 22 is positioned with respect to the attachment portion 23.

The rotation preventing (fixing) hole 26 is provided at the central portion of the attachment portion 23 in the vertical direction and at a front end portion of the attachment portion 23 in the front-rear direction. The rotation preventing hole 26 is formed in the metal plate 23a. The rotation preventing hole 26 is a through-hole extending in the left-right direction. Although not illustrated, the second housing 22 has a protrusion that is fitted into the rotation preventing hole 26, and in a state in which the second housing 22 is attached to the attachment portion 23, the protrusion of the second housing 22 and the rotation preventing hole 26 are fitted.

The opening portion 27 is provided at the central portion of the attachment portion 23 in the vertical direction and at a rear end portion of the attachment portion 23 in the front-rear direction. The opening portion 27 communicates with the interior space and an exterior space of the first housing 21.

The groove portion 28 is positioned behind the positioning hole 25 and has a groove (a recess portion) formed in an arc shape having a predetermined width around a central axis line of the positioning hole 25. The groove portion 28 is located to overlap opening portion 27. That is, the opening portion 27 is formed at a central portion of the groove portion 28 in the vertical direction.

Returning to FIG. 1, a manipulation unit 4 is provided on a front end portion side (the front side) with respect to a center of the first housing 21 in the longitudinal direction and has a trigger lever 41 and a manipulation finger protection portion 42 that partially project outward from the first housing 21. The trigger lever 41 functions as a manipulation input portion that receives a manipulation input for operating the cutting unit 3.

The trigger lever 41 is rotatably pivot-supported inside the first housing 21 and rotates when a force is applied. Further, a manipulation detection sensor for detecting that the trigger lever 41 is manipulated (rotated) is provided inside the first housing 21. The manipulation detection sensor is electrically connected to the control unit 7 and sends a signal corresponding to the manipulation of the trigger lever 41 to the control unit 7. Note that a trigger button may be provided instead of the trigger lever 41.

Further, the manipulation finger protection portion 42 is formed to have a manipulation hole surrounding the manipulation unit 4. However, the manipulation hole of the manipulation finger protection portion 42 has a space having a size to the extent that the user can sufficiently move a finger when manipulating the manipulation unit 4. In the present embodiment, the manipulation finger protection portion 42 is formed by a bar-shaped member that is curved to project downward as viewed from the manipulation unit 4. Note that the manipulation finger protection portion 42 may be formed integrally with the first housing 21 (as a part of the first housing 21) or may be formed as a separate member from the first housing 21.

The drive unit 5 includes an electric motor (an electric drive source) 5a that generates a rotational driving force, a first transmission element 5b that is mechanically connected to a movable member of the cutting unit 3, and a second transmission element 5c for transmitting the rotational driving force of the electric motor 5a to the first transmission element 5b. For example, the electric motor 5a is a general-purpose rotary motor and is located on the other end portion side (the rear side) with respect to a center of the housing 2 in the longitudinal direction. The second transmission element 5c is a transmission shaft that is mechanically connected to a motor shaft of the electric motor 5a. The first transmission element 5b is a bevel gear (a first gear) mechanically connected to a front end portion of the second transmission element 5c. The first transmission element 5b is located to project outward with respect to a bottom surface of the groove portion 28. In the drive unit 5, the rotational driving force generated by the electric motor 5a is transmitted via the second transmission element 5c to the first transmission element 5b. That is, when the electric motor 5a is operated, the first transmission element 5b is rotated.

The power supply unit 6 has at least one of a built-in battery built in the housing 2, a detachable battery detachable from the housing 2, and a power cable connected to a commercial power supply. In the present embodiment, the power supply unit 6 has an electric cell (battery) 61 detachable from the housing 2.

The control unit 7 includes a CPU, a memory, and the like, receives a signal from each part of the electric long reach pruning shears 1, transmits a control signal to each part of the electric long reach pruning shears 1, and performs various types of controls. For example, the control unit 7 executes opening/closing operation control processing or the like of the cutting unit 3 performed by operating the electric motor 5a.

As illustrated in FIGS. 3 and 4, the cutting unit 3 is attached to a distal end portion of the cylindrical handle portion 9 and has a function of pinching and cutting a cutting target object (for example, a plant) with two blades including at least one movable blade. In the present embodiment, the cutting unit 3 has a fixed blade 3A and a movable blade 3B that faces the fixed blade 3A to be opened and closed. The fixed blade 3A is fixed so as not to be displaced with respect to the cylindrical handle portion 9, and the movable blade 3B is provided (movable) to be displaceable with respect to the cylindrical handle portion 9.

The fixed blade 3A is made of a metal material, is formed in a plate shape, and has a front end side functioning as a fixed blade cutting portion that sandwiches a cutting target object in cooperation with the movable blade 3B. The fixed blade 3A is fixed to the distal end portion of the cylindrical handle portion 9.

The movable blade 3B is made of a metal material, is formed in a plate shape, and has a front end side functioning as a movable blade cutting portion that sandwiches a cutting target object in cooperation with the fixed blade 3A. The movable blade cutting portion is formed to have a thickness that gradually decreases toward a side facing the fixed blade 3A.

Note that the type of cutting unit 3 may be any type as long as at least one of the blades is the movable blade 3B and may be a type in which only one blade is movable or a type in which both of the two blades are movable.

In the electric long reach pruning shears 1 of the present embodiment, the cylindrical handle portion 9 is provided between the cutting unit 3 and the housing 2 (the first housing 21 and the second housing 22), thereby locating the cutting unit 3 (the fixed blade 3A and the movable blade 3B) at a position away from the housing 2 (the first housing 21 and the second housing 22) in order to cut a branch, a leaf, or the like at a high position on a tree.

As illustrated in FIGS. 3 and 4, the transmission mechanism 8 is a mechanism that is interposed between the drive unit 5 and the cutting unit 3 to operate the cutting unit 3 (to transmit the rotational driving force generated by the drive unit 5 to the movable blade 3B), and includes a first link mechanism 81, a link rod 82, and a second link mechanism 83.

The first link mechanism 81 is a link mechanism that is accommodated in the second housing 22, receives a rotational driving force derived from the electric motor 5a, and outputs the rotational driving force as a linear reciprocating motion (the linear driving force) to the other end portion. The first link mechanism 81 includes a rotary member 81a that meshes with the first transmission element 5b (the first gear) and a link arm 81b that is displaceable in the axis line direction (a first axis line direction) of the cylindrical handle portion 9.

The rotary member 81a is made of a metal material, formed in a plate shape, is provided to be rotatable around a rotation axis line (a second axis line C2) extending in the left-right direction, and has a gear portion meshed with the first transmission element 5b (the first gear) on a surface facing the first transmission element 5b. The gear portion of the rotary member 81a is rotated along the groove portion 28 of the attachment portion 23.

The link arm 81b is a rod-shaped, cylindrical, or plate-shaped member made of a metal material, is located to extend along the first axis line direction, and is configured to receive a driving force from the rotary member 81a via an appropriate link member. In this example, a link portion 81c on an opposite side to the gear portion with respect to the second axis line C2 in the rotary member 81a and a proximal side end portion of the link arm 81b are connected by a link member 81d. Therefore, the link arm 81b is linearly driven (linearly reciprocating) in the first axis line direction together with the rotation of the rotary member 81a. In particular, the rotary member 81a and the link arm 81b are coupled by the link member 81d instead of being directly coupled, thereby enabling the link arm 81b to smoothly reciprocate linearly and enabling the movable blade 3B at the distal end to be smoothly opened and closed.

The link rod 82 is a rod-shaped, cylindrical, or plate-shaped long member having one end portion mechanically connected (coupled) to a distal end portion of the link arm 81b (the other end portion of the first link mechanism 81), and the other end portion mechanically connected to the second link mechanism 83. The link rod 82 is located to extend along the first axis line direction and is linked to the link arm 81b to be linearly driven (to linearly reciprocate) in the first axis line direction.

In the present embodiment, the link arm 81b and the link rod 82 are connected (screwed) by screws having an axial direction along the first axis line direction (not illustrated). Specifically, a male screw is formed on an outer circumferential surface of one of the link arm 81b and the link rod 82, and a female screw is formed on an inner circumferential surface of the other thereof, and connection is performed by screwing these male and female screw. However, the screws of connection portions of the link arm 81b and the link rod 82 are in a state in which the screws engage with each other, but are not fixed. Therefore, the link arm 81b and the link rod 82 are relatively rotatable around the first axis line C1. On the other hand, in a case where either the link arm 81b or the link rod 82 is displaced (moved) in the first axis line direction, both are linked to be displaced. Further, the link arm 81b and the link rod 82 are connected by the screws such that a screw thread and a screw groove of each are screwed to each other by at least one rotation of 360 degrees, and preferably, the screw thread and the screw groove are screwed to each other by at least one rotation of 360 degrees after the screwing is started. This prevents the link arm 81b and the link rod 82 from being unscrewed even when the link arm and the link rod are relatively rotated by nearly 360 degrees. Further, the second link mechanism 83 and the link rod 82 are connected (screw-connected) by screws having an axial direction along the first axis line direction (not illustrated). A connection structure by the screws is the same as the connection structure with the link arm 81b. That is, the link rod 82 is connected to other member by screws at both the one end portion (the link arm 81b) and the other end portion (the second link mechanism 83). Here, one of the screws provided at one end portion and the other end portion of the link rod 82 may be fixed. As a fixing method of the screws, for example, turning directions of the screws of the one end portion and the other end portion may be the same (both right-handed screws or both left-handed screws). Further, instead of or in addition to this, one screw of the one end portion and the other end portion may be fixed with an adhesive, or a nut that is fixed to the screw may be provided on the link arm 81b or the second link mechanism 83.

The second link mechanism 83 is a mechanism for converting a linear driving force (linear reciprocating motion) of the link rod 82 into a rotational driving force (rotational motion) and rotating the movable blade 3B. For example, in a case where the movable blade 3B is formed in an L shape, the second link mechanism 83 can have a configuration in which the link rod 82 is connected to an end portion of the movable blade 3B on a side opposite to a movable blade cutting portion. In this manner, the linear reciprocating motion of link rod 82 can be converted into the rotational motion of movable blade 3B.

With the above-described configuration, as illustrated in FIGS. 3 and 4, when the electric motor 5a is operated, the first transmission element 5b (the first gear) is rotated, and the rotary member 81a that meshes with the first transmission element 5b is rotated. At this time, rotation of the rotary member 81a enables the link arm 81b and the link rod 82 connected thereto to be displaced in the first axis line direction, and enables the driving force to be applied to the movable blade 3B via the second link mechanism 83 connected to the link rod 82, and enables the movable blade 3B to be opened and closed with respect to the fixed blade 3A. Therefore, the movable blade cutting portion of the movable blade 3B and a fixed blade cutting portion of the fixed blade 3A can function as shears and can cut a cutting target object such as a branch or a leaf. A basic configuration of the electric long reach pruning shears 1 has been described above. Hereinafter, structures of the cylindrical handle portion 9 and a holding portion 30 will be described.

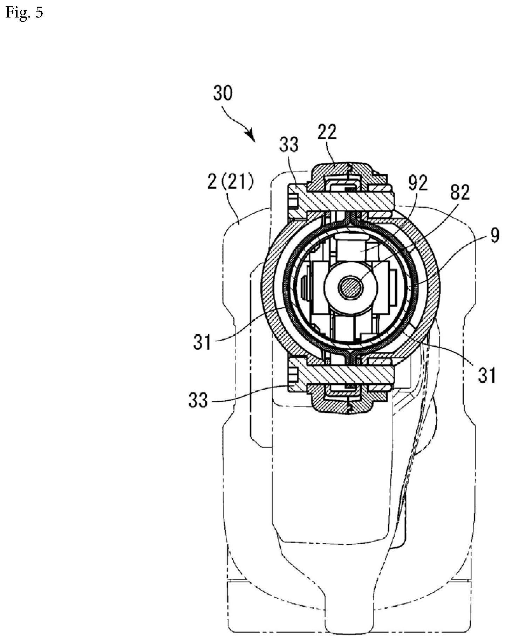

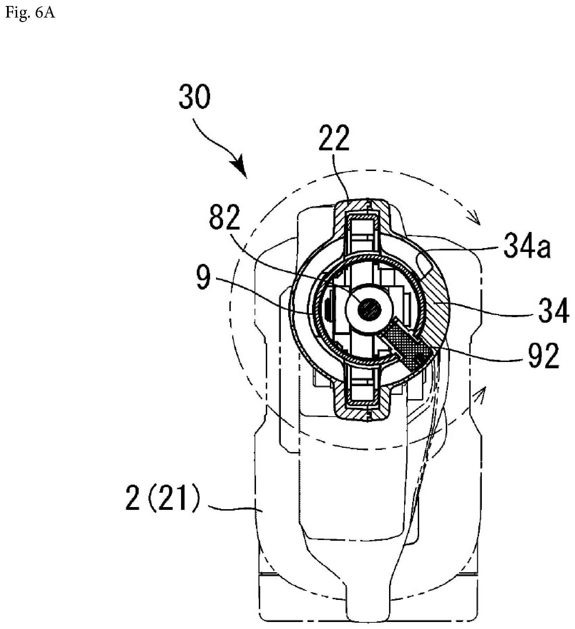

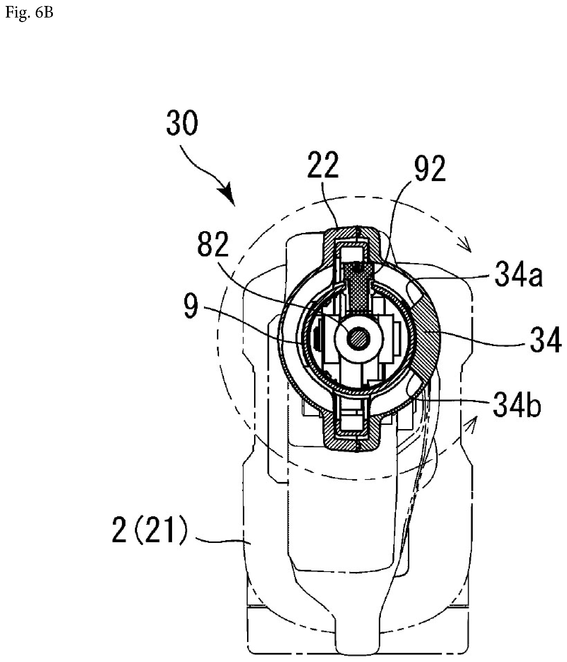

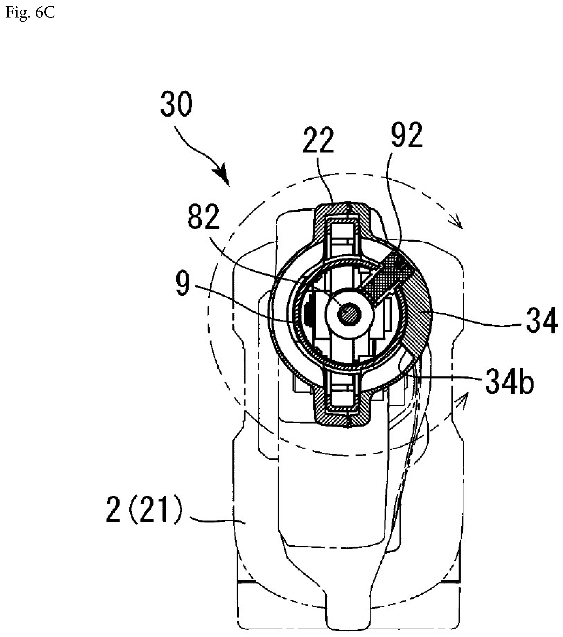

FIG. 5 is a cross-sectional view illustrating the structure of the holding portion 30 (a stopper member 31). FIG. 6A is a cross-sectional view illustrating a relationship between the cylindrical handle portion 9 and a rotation restriction portion 34 in a first state. FIG. 6B is a cross-sectional view illustrating a relationship between the cylindrical handle portion 9 and the rotation restriction portion 34 in a second state. FIG. 6C is a cross-sectional view illustrating a relationship between the cylindrical handle portion 9 and the rotation restriction portion 34 in a third state. Note that FIG. 5 is a cross-sectional view taken along arrow line A-A in FIG. 4, and FIGS. 6A to 6C are cross-sectional views taken along arrow line B-B in FIG. 4.

As illustrated in FIGS. 3 to 5, the cylindrical handle portion 9 has a cylindrical body 90, a spacer 91, and a retaining protrusion 92. The cylindrical body 90 is a long cylindrical member made of a metal material, is provided between the first link mechanism 81 and the second link mechanism 83, and covers at least an outer circumference of the link rod 82.

The spacer 91 is a substantially ring-shaped member that is brought into sliding contact with a rear end surface of the cylindrical body 90. For example, the spacer 91 is attached to a rear end of the cylindrical body 90 so that an end surface of the spacer 91 is brought into sliding contact with the rear end surface of the cylindrical body 90. Further, the spacer 91 is made of a material having higher mechanical strength (hardness, wear resistance, durability, or the like) than at least the cylindrical body 90.

The housing 2 (the second housing 22) has the holding portion 30 for holding the cylindrical handle portion 9 at a predetermined position. The holding portion 30 has a stopper member 31 that is fixed to a distal end portion of the housing 2 (the second housing 22) and covers an outer circumferential surface of the cylindrical handle portion 9, and a plate-shaped fixed plate 32 that is located on the rear end side with respect to the stopper member 31 and is fixed to the housing 2 (the second housing 22). Each of the stopper member 31 and the fixed plate 32 is made of a metal material and is fixed to the housing 2 (the second housing 22) by an appropriate fastening member.

The stopper member 31 is a cylindrical member formed to cover the outer circumferential surface of the cylindrical handle portion 9 (the cylindrical body 90). In the present embodiment, the stopper member 31 includes two semi-cylindrical members divided into left and right portions. The stopper member 31 has flange portions formed to extend radially outward from both upper and lower end portions of the stopper member, and the stopper member 31 is fixed to the housing 2 (the second housing 22) by fastening members 33 that fasten the flange portions to the housing 2 (the second housing 22).

The stopper member 31 has an inner diameter that is set slightly larger than an outer diameter of the cylindrical handle portion 9 (the cylindrical body 90). Therefore, an inner circumferential surface of the stopper member 31 and an outer circumferential surface of the cylindrical handle portion 9 (the cylindrical body 90) are formed to be brought into substantially close contact with each other. Therefore, the stopper member 31 restricts movement of the cylindrical handle portion 9 in an outer diameter direction. However, the inner circumferential surface of the stopper member 31 does not press the outer circumferential surface of the cylindrical handle portion 9 (the cylindrical body 90), and the stopper member 31 supports the cylindrical handle portion 9 to such an extent that rotation around the first axis line C1 is performed.

Further, the cylindrical handle portion 9 has the retaining protrusion 92 that is located on the rear end side with respect to the stopper member 31 and projects outward from the outer circumferential surface of the cylindrical handle portion 9 (the cylindrical body 90). For example, the retaining protrusion 92 is formed by a head portion of a bolt fixed to the cylindrical body 90.

The retaining protrusion 92 protrudes outward with respect to the stopper member 31 and abuts the stopper member 31 in the front-rear direction or is located at a position slightly separated from the stopper member 31. Therefore, a rear end portion of the stopper member 31 and a front end portion of the retaining protrusion 92 are formed to abut or slightly separate from each other. Therefore, the retaining protrusion 92 is restricted by the stopper member 31 so as not to move frontward. That is, frontward movement of the cylindrical handle portion 9 (movement in a direction in which the cylindrical handle portion 9 comes out of the housing 2) is restricted by the relationship between the stopper member 31 and the retaining protrusion 92. In this manner, the stopper member 31 and the retaining protrusion 92 function as retaining portions that restrict the movement of the cylindrical handle portion 9 toward the distal end side with respect to the housing 2 (the second housing 22).

The fixed plate 32 fixedly or displaceably holds each member of the first link mechanism 81. Further, a front end edge of the fixed plate 32 abuts a part of a ring of the rear end portion (the spacer 91) of the cylindrical handle portion 9, whereby the fixed plate 32 restricts rearward movement of the cylindrical handle portion 9. That is, the spacer 91 is also a member that is interposed between the fixed plate 32 and the cylindrical body 90 and prevents the fixed plate 32 and the cylindrical body 90 (particularly, the rear end edge of the cylindrical body 90) from being excessively worn and recessed. Therefore, by providing the spacer 91, the durability of the fixed plate 32 and the cylindrical body 90 can be improved.

The cylindrical handle portion 9 is restricted from moving rearward by the relationship between the fixed plate 32 and the rear end portion (the spacer 91) of the cylindrical handle portion 9, is restricted from moving frontward by the relationship between the stopper member 31 and the retaining protrusion 92, and is supported by the stopper member 31 so as to be rotatable around the first axis line C1. That is, the cylindrical handle portion 9 is rotatable around the first axis line C1 and is held so as not to come off from the housing 2 (the second housing 22) (so as not to displace the position in the first axis line direction).

As illustrated in FIGS. 6A to 6C, at a position corresponding to the retaining protrusion 92 (on the same plane perpendicular to the first axis line C1) in the first axis line direction, the rotation restriction portion 34 that restricts the rotation of the cylindrical handle portion 9 with respect to the housing 2 (the second housing 22) at a rotation angle of at least smaller than 360° is provided. In the present embodiment, the rotation restriction portion 34 is formed by a projecting portion that projects from an inner wall of the housing 2 (the second housing 22) toward an inner side (the cylindrical handle portion 9 side).

In the present embodiment, an upper surface of the rotation restriction portion 34 serves as a first restriction surface 34a, and a lower surface of the rotation restriction portion 34 serves as a second restriction surface 34b. Each of the first restriction surface 34a and the second restriction surface 34b is located on a movement track (a rotation track) of the retaining protrusion 92 when the cylindrical handle portion 9 is rotated. Therefore, when the cylindrical handle portion 9 is continuously rotated in a certain direction (a first direction), the retaining protrusion 92 abuts one of the first restriction surface 34a and the second restriction surface 34b to restrict the rotation, and when the cylindrical handle portion 9 is continuously rotated in a direction (a second direction) opposite to the first direction, the retaining protrusion 92 abuts the other of the first restriction surface 34a and the second restriction surface 34b to restrict the rotation.

In the present embodiment, assuming that the first direction is a clockwise direction when viewed from the front (the same as the paper surface), the retaining protrusion 92 abuts the first restriction surface 34a, when the cylindrical handle portion 9 is continuously rotated in the first direction (a state of FIG. 6A). On the other hand, when the cylindrical handle portion 9 is continuously rotated in the second direction (a counterclockwise direction as viewed from the front), the retaining protrusion 92 abuts the second restriction surface 34b (a state of FIG. 6C). That is, when the retaining protrusion 92 is separated from each of the first restriction surface 34a and the second restriction surface 34b (the state of FIG. 6B), the cylindrical handle portion 9 can be freely rotated.

The upper limit of the rotation angle of the cylindrical handle portion 9 with respect to the rotation restriction portion 34 can be set to 320° or lower, preferably 300° or lower, and more preferably 270° or lower. Further, the lower limit of the rotation angle of the cylindrical handle portion 9 with respect to the rotation restriction portion 34 can be set to 180° or more, preferably 240° or higher, and more preferably 270° or higher.

According to the present invention, since the holding portion 30 that holds the cylindrical handle portion 9 to be rotatable around the first axis line C1 with respect to the housing 2 (the second housing 22) is provided, the angle adjustment of the blade can be easily performed. Therefore, it is possible to use the electric long reach pruning shears 1 by rotating only a distal portion from the cylindrical handle portion 9 to adjust an angle of the blade to match an angle of a branch or a leaf, and it is possible to greatly improve the workability.

Further, according to the present invention, since the rotation restriction portion 34 that restricts rotation around the first axis line C1 with respect to the housing 2 (the second housing 22) at a predetermined rotation angle is provided, it is possible to prevent excessive rotation of the cylindrical handle portion 9. As described above, the link arm 81b and the link rod 82 are connected by screws, and the link rod 82 is configured to be linked to the cylindrical handle portion 9 to be rotated. Therefore, when the cylindrical handle portion 9 is continuously rotated in a certain direction, relative positions of the link rod 82 and the link arm 81b in the first axis line direction are displaced, and accordingly, the relative positions of the link rod 82 and the second link mechanism 83 (the movable blade 3B) are also linked to each other and are changed. In a case where the link rod 82 is excessively separated from the second link mechanism 83 (the movable blade 3B), or the link rod 82 is excessively close to the second link mechanism 83 (the movable blade 3B), a force is excessively applied in either the direction in which the movable blade 3B is opened or the direction in which the movable blade 3B is closed, and there is a possibility that the positional relationship between the movable blade cutting portion of the movable blade 3B and the fixed blade cutting portion of the fixed blade 3A is broken, and the movable blade and the fixed blade may not function as the shears. In view of this problem, in the present invention, since the cylindrical handle portion 9 only reciprocates within a range of a predetermined rotation angle restricted by the rotation restriction portion 34, the positional relationship between the link rod 82 and the second link mechanism 83 (the movable blade 3B) can be regulated to change within a predetermined range, and the function as the shears can be secured.

Further, according to the present invention, since the spacer 91 is interposed between the fixed plate 32 and the cylindrical body 90 and is made of a material having higher mechanical strength (high strength, durability, or the like) with respect to the cylindrical body 90, and durability of the fixed plate 32 and the cylindrical body 90 can be improved.

Furthermore, according to the present invention, since the retaining portion that restricts the movement of the cylindrical handle portion 9 toward the distal end side with respect to the housing 2 (the second housing 22) is further provided, the cylindrical handle portion 9 can be prevented from coming off from the housing 2 (the second housing 22). Further, since the retaining portion has the stopper member 31 that is fixed to the housing 2 (the second housing 22) and covers an outer circumferential surface of the cylindrical handle portion 9, and the retaining protrusion 92 that is positioned on the rear end side with respect to the stopper member 31 and protrudes outward from the outer circumferential surface of the cylindrical handle portion 9 with respect to the stopper member 31, the retaining portion of the cylindrical handle portion 9 can be configured with a simple configuration.

Further, according to the present invention, since the link arm 81b and the link rod 82 are connected by the screw having an axial direction along the first axis line direction, it is possible to transmit the driving force without hindering the rotation about the first axis line C1.

Electric shears of the present invention correspond to the electric long reach pruning shears 1 of the embodiment described above, and similarly, a housing corresponds to the housing 2, a movable blade corresponds to the movable blades 3B, a cutting unit corresponds to a cutting unit 3, a drive unit corresponds to the drive unit 5, a power supply unit corresponds to the power supply unit 6, a transmission mechanism corresponds to the transmission mechanism 8, a holding portion corresponds to the holding portion 30, a rotation restriction portion corresponds to the rotation restriction portion 34, a spacer corresponds to the spacer 91, a fixed plate corresponds to the fixed plate 32, a retaining portion corresponds to the stopper member 31 and the retaining protrusion 92, a stopper member corresponds to the stopper member 31, a retaining protrusion corresponds to the retaining protrusion 92, and a link arm corresponds to the link arm 81b, and a link rod corresponds to the link rod 82, but the present invention is not limited to the present embodiment, and various other embodiments can be provided.

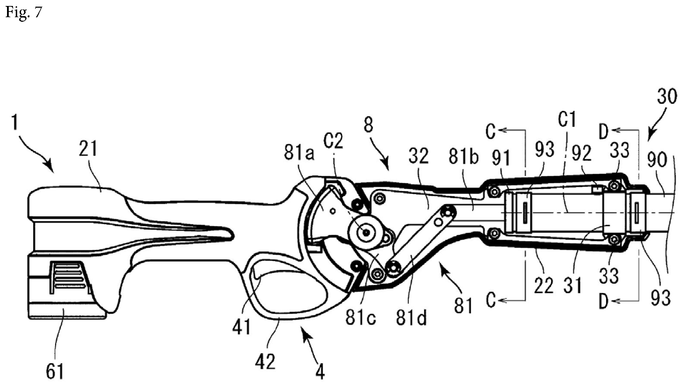

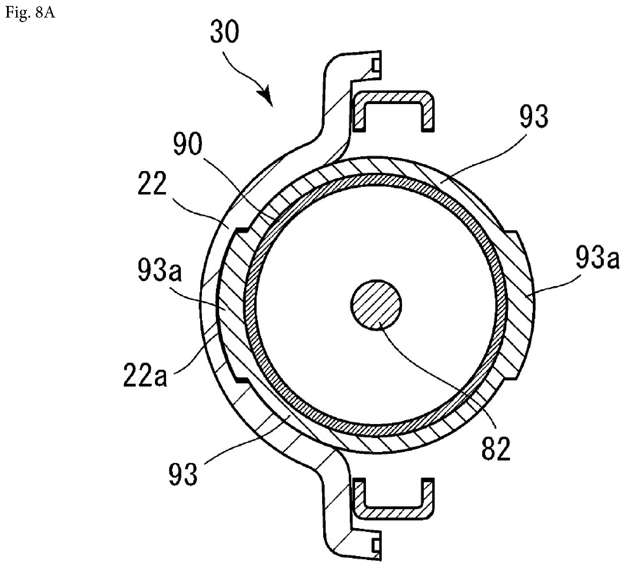

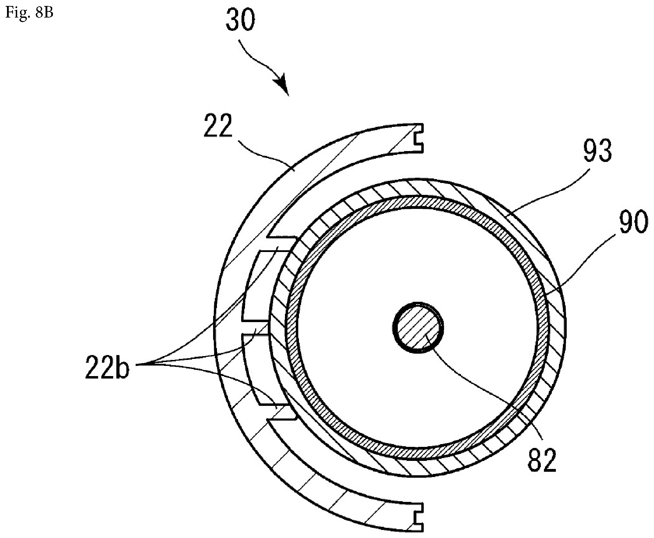

FIG. 7 is a schematic view illustrating a structure of an attachment member 93 in a modification embodiment (a second embodiment). FIG. 8A is an end view illustrating the structure of the attachment member 93 in the second embodiment. FIG. 8B is an end view illustrating a structure of the attachment member 93 in the second embodiment. Note that FIG. 8A is an end view taken along arrow line C-C in FIG. 7, and FIG. 8B is an end view taken along arrow line D-D in FIG. 7. Hereinafter, a configuration of the electric long reach pruning shears 1 according to the second embodiment will be described; however, the same configurations as those of the electric long reach pruning shears 1 described in the first example will be denoted by the same reference signs, and redundant details will not be described or will be briefly described.

For example, as illustrated in FIGS. 7, 8A, and 8B, the electric long reach pruning shears 1 of the second embodiment may further include an attachment member 93 attached to the outer circumferential surface of the cylindrical handle portion 9 (the cylindrical body 90). The attachment member 93 is a member that covers the outer circumferential surface of the cylindrical handle portion 9. However, an inner circumferential surface of the attachment member 93 does not press the outer circumferential surface of the cylindrical handle portion 9 (the cylindrical body 90), and the attachment member 93 supports the cylindrical handle portion 9 to such an extent that rotation around the first axis line C1 is performed. Note that a thickness of the attachment member 93 is appropriately set depending on a gap between the cylindrical handle portion 9 (the cylindrical body 90) and the housing 2 (the second housing 22). That is, when using the cylindrical handle portion 9 (the cylindrical body 90) having an outer diameter smaller than an outer diameter (a reference outer diameter) when the cylindrical handle portion 9 (the cylindrical body 90) is located without a gap with respect to the housing 2 (the second housing 22), the attachment member 93 is provided to fill the gap between the cylindrical handle portion 9 (the cylindrical body 90) and the housing 2 (the second housing 22), and the cylindrical handle portion 9 (the cylindrical body 90) can be located at an appropriate position.

Further, there may be provided a fitting mechanism by a combination of a fitting portion 93a and a recess portion or a protruding portion provided in the housing 2 (the second housing 22), the fitting portion 93a being fitted in or on the recess portion or the protruding portion. In this manner, the attachment member 93 can be easily positioned and attached to the housing 2 (the second housing 22). Further, it is possible to prevent misalignment of the attachment member 93 in a case where the cylindrical handle portion 9 (the cylindrical body 90) is rotated or in a case where a force is applied to the cylindrical handle portion 9 (the cylindrical body 90) when the cutting unit 3 is operated.

In this manner, also in the second embodiment, the cylindrical handle portion 9 (the cylindrical body 90) having a different outer diameter can be used without changing the configuration other than the cylindrical handle portion 9 (cylindrical body 90) such as the housing 2 (the second housing 22). Hence, the second embodiment is conveniently implemented.

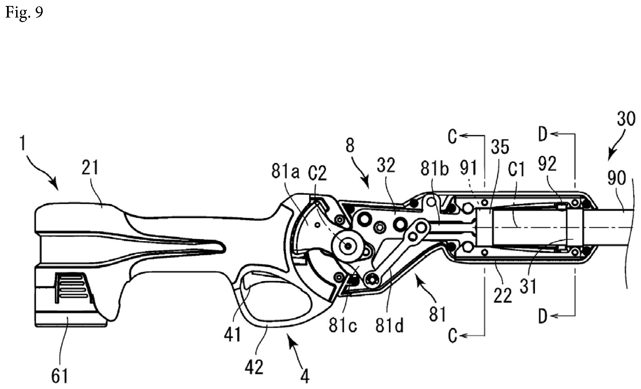

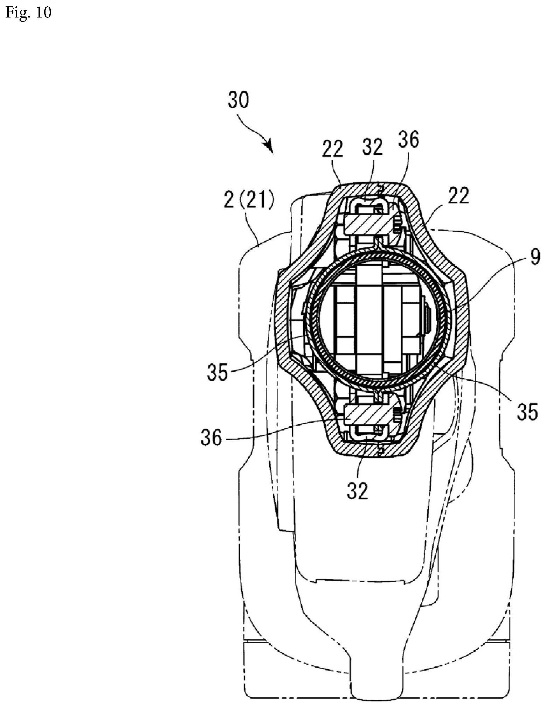

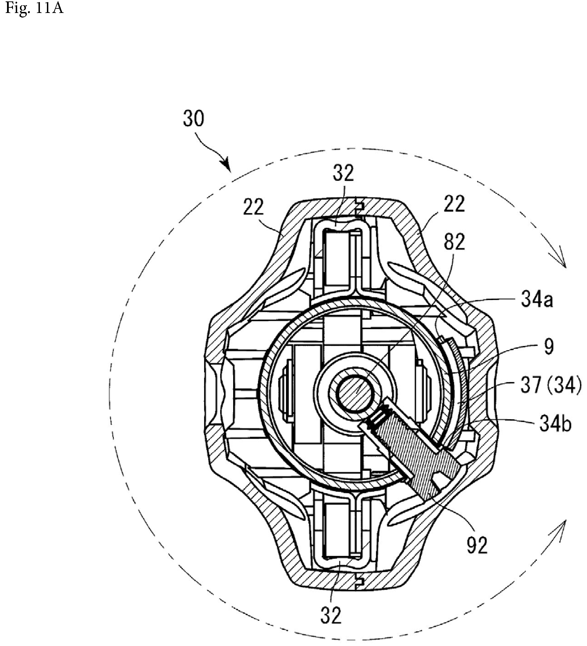

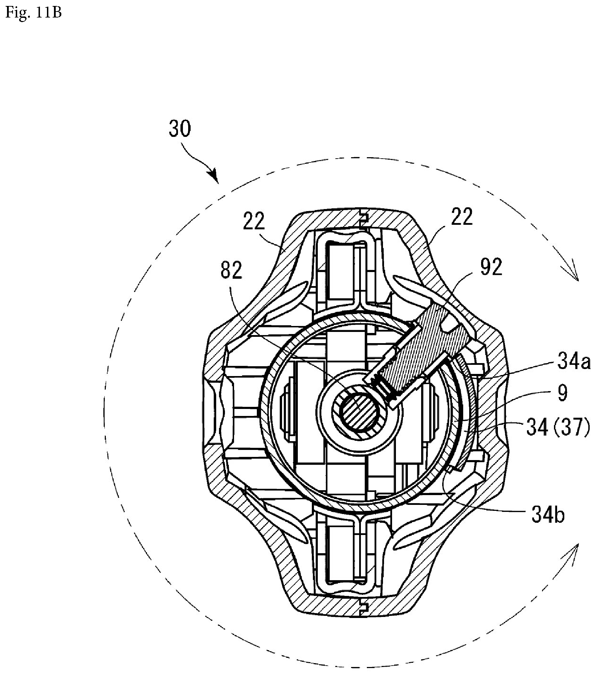

FIG. 9 is a schematic view illustrating a structure of the holding portion 30 according to a modification embodiment (a third embodiment). FIG. 10 is a schematic view illustrating the structure of the holding portion 30 in the third embodiment. FIG. 11A is a schematic view illustrating the structure of the holding portion 30 in the third embodiment. FIG. 11B is a schematic view illustrating the structure of the holding portion 30 in the third embodiment. Note that FIG. 10 is a cross-sectional view taken along arrow line C-C in FIG. 9, and FIGS. 11A and 11B are cross-sectional views taken along arrow line D-D in FIG. 9. Hereinafter, a configuration of the electric long reach pruning shears 1 according to the third embodiment will be described; however, the same configurations as those of the electric long reach pruning shears 1 described in the first embodiment will be denoted by the same reference signs, and redundant details will not be described or will be briefly described.

For example, as illustrated in FIG. 9, in the electric long reach pruning shears 1 of the third embodiment, the holding portion 30 has the stopper member 31, the fixed plate 32, the rotation restriction portion 34, and a rear end support portion 35.

As illustrated in FIGS. 9 and 10, the rear end support portion 35 is a cylindrical member formed to cover an outer circumferential surface of the rear end of the cylindrical handle portion 9 (the cylindrical body 90). The rear end support portion 35 includes two semi-cylindrical members divided into left and right portions. The rear end support portion 35 has flange portions formed to extend radially outward from both upper and lower end portions of the rear end support portion, and the rear end support portion 35 is fixed to the fixed plate 32 and the housing 2 (the second housing 22) by fastening members 36 that fasten the flange portions to the fixed plate 32.

The rear end support portion 35 has an inner diameter that is set slightly larger than the outer diameter of the cylindrical handle portion 9 (the cylindrical body 90). Therefore, an inner circumferential surface of the rear end support portion 35 and the outer circumferential surface of the cylindrical handle portion 9 (the cylindrical body 90) are formed to be brought into substantially close contact with each other. Therefore, the rear end support portion 35 restricts movement of the cylindrical handle portion 9 in the outer diameter direction. However, the inner circumferential surface of the rear end support portion 35 does not press the outer circumferential surface of the cylindrical handle portion 9 (the cylindrical body 90), and the rear end support portion 35 supports the cylindrical handle portion 9 to such an extent that rotation around the first axis line C1 is performed. That is, the rear end support portion 35 rotatably pivot-supports the cylindrical handle portion 9 (cylindrical body 90). Further, the rear end support portion 35 is located separately from the stopper member 31 that rotatably pivot-supports the cylindrical handle portion 9 (the cylindrical body 90) by a predetermined distance in the extension direction of the first axis line C1. That is, since the cylindrical handle portion 9 (the cylindrical body 90) is pivot-supported at two positions of the rear end support portion 35 and the stopper member 31 which are separated by the predetermined distance, a stable posture can be maintained. In particular, according to the configuration of the third embodiment, it is possible to prevent the cylindrical handle portion 9 (the cylindrical body 90) from being inclined (shaft shake) with respect to the first axis line C1 along which the cylindrical handle portion 9 is originally present.

As illustrated in FIGS. 11A and 11B, the electric long reach pruning shears of the third embodiment also includes the rotation restriction portion 34 that restricts, at a predetermined rotation angle, the rotation of the cylindrical handle portion 9 with respect to the housing 2 (the second housing 22) at a position corresponding to the retaining protrusion 92 (on the same plane perpendicular to the first axis line C1).

However, in the first embodiment, the rotation restriction portion 34 is formed by the inner wall of the housing 2 (the second housing 22), but in the electric long reach pruning shears 1 of the third embodiment, the rotation restriction portion 34 is formed by a metal member. Specifically, the rotation restriction portion 34 of the third embodiment is formed by a metal plate-shaped member (metal plate) 37 fixed to at least one of the fixed plate 32, the stopper member 31, and the inner wall of the housing 2. The metal plate 37 is formed in a curved shape bulging toward the outer diameter direction of the cylindrical handle portion 9.

Further, at least an upper end and a lower end of the metal plate 37 are positioned on a movement track (a rotation track) of the retaining protrusion 92 when the cylindrical handle portion 9 is rotated. This makes an upper end surface of the metal plate 37 (the rotation restriction portion 34) become the first restriction surface 34a, and makes a lower end surface of the metal plate 37 (the rotation restriction portion 34) become the second restriction surface 34b. Therefore, when the cylindrical handle portion 9 is continuously rotated in a certain direction (a first direction), the retaining protrusion 92 abuts one of the first restriction surface 34a and the second restriction surface 34b to restrict the rotation, and when the cylindrical handle portion 9 is continuously rotated in a direction (a second direction) opposite to the first direction, the retaining protrusion 92 abuts the other of the first restriction surface 34a and the second restriction surface 34b to restrict the rotation. At this time, in the third embodiment, since the rotation restriction portion 34 that abuts the retaining protrusion 92 is formed by the metal plate 37, the rotation restriction portion 34 has high rigidity and durability, and it is possible to reduce or prevent wear or damage of the rotation restriction portion 34 due to continuous use of the electric long reach pruning shears 1. In particular, in a case where the metal plate 37 is fixed to either the fixed plate 32 or the stopper member 31 (in a case where the metal plate is not directly fixed to the housing 2), the impact when the retaining protrusion 92 hits the rotation restriction portion 34 is not directly transmitted to the housing 2, so that it is possible to reduce or prevent wear and damage of the housing 2.

As described above, the present invention can be realized as the electric long reach pruning shears 1 in which the rotation restriction portion 34 is formed by the metal plate 37. Further, the present invention can be realized as the electric long reach pruning shears 1 including the rear end support portion 35 that is fixed to the fixed plate 32 and the housing 2 (the second housing 22) and covers the outer circumferential surface of the rear end of the cylindrical handle portion 9 (the cylindrical body 90).

### Industrial Applicability

The present invention can be used in the industry of electric long reach pruning shears used for cutting a branch and the like at a high position of a tree.

### Reference Signs List

- 1: electric long reach pruning shears
- 2: housing
- 21: first housing
- 22: second housing
- 23: attachment portion
- 3: cutting unit
- 3A: fixed blade
- 3B: movable blade
- 5: drive unit
- 5a: electric motor
- 6: power supply unit
- 7: control unit
- 8: transmission mechanism
- 9: cylindrical handle portion
- 90: cylindrical body
- 91: spacer
- 30: holding portion
- 31: stopper member
- 32: fixed plate
- 34: rotation restriction portion
- 35: rear end support portion

## Claims

1. Electric long reach pruning shears for cutting a plant at a high position, comprising:
a cylindrical handle portion that extends in a predetermined axis line direction;
a cutting unit that is attached to a distal end portion of the cylindrical handle portion and has two blades including at least one movable blade;
a drive unit for applying a driving force to the movable blade;
a housing that is attached to a rear end portion of the cylindrical handle portion and accommodates the drive unit;
a transmission mechanism for transmitting the driving force to the movable blade, the transmission mechanism being interposed between the drive unit and the cutting unit;
a holding portion that holds the cylindrical handle portion to be rotatable around an axis line of the cylindrical handle portion with respect to the housing; and
a rotation restriction portion that restricts, at a predetermined rotation angle, rotation of the cylindrical handle portion around the axis line with respect to the housing.

2. The electric long reach pruning shears according to claim 1, wherein
the holding portion has a plate-shaped fixed plate fixed to the housing,
the cylindrical handle portion has a cylindrical body and a spacer that covers a rear end surface of the cylindrical body and abuts the fixed plate, and
the spacer has higher mechanical strength than the cylindrical body.

3. The electric long reach pruning shears according to claim 2, further comprising
a retaining portion that restricts movement of the cylindrical handle portion toward a distal end side with respect to the housing.

4. The electric long reach pruning shears according to claim 3, wherein
the retaining portion has a stopper member that is fixed to the housing and covers an outer circumferential surface of the cylindrical handle portion, and a retaining protrusion that is positioned on a rear end side with respect to the stopper member and protrudes outward from the outer circumferential surface of the cylindrical handle portion with respect to the stopper member.

5. The electric long reach pruning shears according to any one of claims 1 to 4, wherein
the transmission mechanism has a link arm that is accommodated in the housing and is displaceable in an axis line direction, and a link rod that is attached to a distal end portion of the link arm and is linked coaxially to the link arm,
the link rod is configured to rotate together with rotation of the cylindrical handle portion, and
the link arm and the link rod are connected by a screw having an axial direction along the axis line direction.
